# EUROPÄISCHE PATENTSCHRIFT

(11) **EP 3 943 778 B1**
(45) Veröffentlichungstag und Bekanntmachung des Hinweises auf die Patenterteilung: **07.08.2024**
(21) Anmeldenummer: 21177695.0
(22) Anmeldetag: 04.06.2021
(51) Int. Cl.: F16H 7/08, F16H 7/12

(54) **RIEMENSPANNVORRICHTUNG UND RIEMENTRIEB MIT EINER SOLCHEN RIEMENSPANNVORRICHTUNG**
BELT TENSIONING DEVICE AND BELT DRIVE COMPRISING SUCH A BELT TENSIONING DEVICE
DISPOSITIF DE TENSION DE COURROIE ET ENTRAÎNEMENT DE COURROIE DOTÉ D'UN TEL DISPOSITIF DE TENSION DE COURROIE

(30) Priorität: 20.07.2020 DE 102020004335
(43) Veröffentlichungstag der Anmeldung: 26.01.2022
(73) Patentinhaber: Muhr und Bender KG, 57439 Attendorn (DE)
(72) Erfinder: Stadermann, Florian, 57439 Attendorn (DE); Jud, Joachim, 57567 Daaden (DE); Pfeifer, Simon, 58840 Plettenberg (DE); Jung, Manfred, 56457 Westerburg (DE)
(74) Vertreter: Neumann Müller Oberwalleney Patentanwälte PartG mbB

(56) Entgegenhaltungen:
- DE-A1- 102008 026 064
- DE-A1- 102012 209 028
- DE-A1- 102015 212 084
- DE-A1- 102017 116 000
- JP-A- 2007 032 704
- US-A1- 2015 219 189
- US-A1- 2017 146 100

## Beschreibung

Die Erfindung betrifft eine Riemenspannvorrichtung mit den Merkmalen des Oberbegriffs des Anspruchs 1 und ein Riemenantrieb mit einer solchen Riemenspanvorrichtung.

Eine solche Riemenspannvorrichtung ist aus der US 2017/146100 A1 bekannt. Eine der dort offenbarten Ausführungsformen einer Riemenspannvorrichtung erzeugt eine Dämpfungsmoment, das von der Drehrichtung des ersten Spannarms relativ zum Grundkörper abhängig ist.

DE 10 2015 212 084 A1 bekannt, wobei die dort beschriebene Riemenspannvorrichtung zwei separate Dämpfungseinrichtungen aufweist. Zum einen eine Dämpfungseinrichtung, die zwischen den beiden Spannarmen wirksam ist. Zum anderen eine weitere Dämpfungseinrichtung mit Gleitschalen an der Spannarmvorspannfeder. Somit sind beide Dämpfungseinrichtungen zwischen den beiden Spannarmen wirksam.

Aus der DE 10 2012 209 028 A1 ist eine Riemenspannvorrichtung bekannt, die ebenfalls zwei separate Dämpfungseinrichtungen aufweist. Zum einen ist eine Dämpfungseinrichtung mit Gleitlagerschalen an einer Bogenfeder vorgesehen, mit der eine Bewegung zwischen den Spannarmen gedämpft wird. Um Geräusche bzw. ein Anschlagen eines Spannarms am Ende des Arbeitsbereiches zu verhindern, wird vorgeschlagen, eine Feder mit nichtlinearer Federkennlinie vorzusehen oder die Dämpfkraft in Richtung Ende des Arbeitsbereichs beim Einfahren zu erhöhen. Dies betrifft die Bewegung der beiden Spannarme zueinander. Zum anderen kann zwischen dem Riemenspanner und dem Maschinengehäuse eine weitere Dämpfungseinrichtung mit Reibbelägen und konstanter Dämpfung vorgesehen sein.

Aus der EP 3 431 815 A1 ist eine Riemenspannvorrichtung mit zwei Spannarmen für einen Riementrieb mit Startergenerator bekannt. Die Riemenspannvorrichtung weist einen Grundkörper mit einem Hülsenansatz auf, an dem ein erster Spannarm mittels einer radial-elastischen Lagerbuchse schwenkbar gelagert ist. Die Lagerbuchse ist mit einem von den Teilen, Grundkörper oder erster Spannarm, drehfest verbunden und gegenüber dem anderen der Teile drehbar. Der zweite Spannarm ist an dem Grundkörper schwenkbar gelagert. Die beiden Spannarme werden von einer Federanordnung in Umfangsrichtung gegeneinander vorgespannt. Es sind Vorspannmittel in Form einer Blattfeder vorgesehen, die radial zwischen einer Umfangsfläche der Lagerbuchse und einer Umfangsfläche des mit der Lagerbuchse drehfest verbundenen Teils angeordnet sind. Durch die Vorspannmittel werden geringe Lagetoleranzen und gute Dämpfungseigenschaften erzielt.

Aus der DE 10 2017 124 783 B3 ist eine Spannvorrichtung zum Spannen eines Zugmittels eines Zugmitteltriebs bekannt. Die Spannvorrichtung umfasst einen Grundkörper, zwei Spannarme mit je einer Spannrolle sowie eine Federanordnung mit einer ersten Feder und einer zweiten Feder, die zwischen den zwei Spannarmen wirkend angeordnet sind. Bei relativem Verschwenken innerhalb eines ersten Spannwinkelbereichs sind die beiden Spannarme nur von der ersten Feder gegeneinander kraftbeaufschlagt. Bei relativem Verschwenken innerhalb eines zweiten Spannwinkelbereichs werden die beiden Spannarme von der ersten Feder und zusätzlich von der zweiten Feder gegeneinander kraftbeaufschlagt.

Aus der WO 2014/100894 A1 ist eine Riemenspannvorrichtung mit einem Grundkörper, einem hieran drehbar gelagerten ersten Spannarm sowie einem an dem ersten Spannarm schwenkbar gelagerten zweiten Spannarm bekannt. Es ist eine Dämpfungsstruktur vorgesehen, um den ersten Spannarm gegenüber dem Grundkörper zu dämpfen. Die Dämpfungsstruktur umfasst in einer Ausführungsform eine Tellerfeder, die zwischen dem ersten Spannarm und dem Grundkörper mit axialer Vorspannung angeordnet ist. In einer anderen Ausführungsform sind eine erste und zweite Ringbuchse vorgesehen, die axial vorspannbar sind, um eine Drehbewegung des ersten Spannarms gegenüber dem Gehäuse zu dämpfen.

Zugmitteltriebe in Form von Riementrieben für ein Kraftfahrzeug weisen je nach Fahrzustand bzw. Betriebssituation (Teillast, Volllast, Start, Boost, Rekuperation, Segeln, etc.) unterschiedliche Trumkräfte in den einzelnen Trumen des Riementriebs auf. Dies gilt insbesondere für Riementriebe in Hybridfahrzeugen mit Startergenerator-Funktion. Dies führt zu Schwenkbewegungen und Schwingungen der Riemenspannvorrichtung.

Je nach Betriebssituation muss eine Riemenspannvorrichtung verschiedene technische Anforderungen erfüllen. So soll beim Starten ein Auf- oder Überschwingen des Riemenspanners vermieden werden. Ferner soll im Normalbetrieb eine gute Entkopplungswirkung des Startergenerators gewährleistet sein.

Der vorliegenden Erfindung liegt die Aufgabe zugrunde, eine Riemenspannvorrichtung vorzuschlagen, die gute Dämpfungseigenschaften bei unterschiedlichen Betriebszuständen aufweist.

Die Aufgabe wird durch eine Riemenspannvorrichtung mit den Merkmalen des Anspruchs 1 und einen Riementrieb mit den Merkmalen des Anspruchs 7 gelöst.

Aufgrund des sich in Abhängigkeit der Drehposition und/oder Drehrichtung des ersten Spannarms relativ zum Grundkörper variierenden Dämpfungsmoments können die Dämpfungsmittel derart ausgelegt werden, dass sie eine an den jeweiligen Betriebszustand des Riementriebs angepasste Dämpfung bereitstellen.

Da das Federelement in der mittleren Drehposition des ersten Spannarms mit der Ausnehmung in Überdeckung angeordnet ist, wird von dem Federelement eine geringere radiale Spannkraft zwischen der Lagerfläche des Grundkörpers und der Lagerfläche des ersten Spannarms ausgeübt als in einer von der mittleren Drehposition abweichenden ausgeschwenkten Drehposition, in der das Federelement nur teilweise oder nicht mit der Ausnehmung in Überdeckung ist. Die Ausnehmung sorgt dafür, dass das Federelement in der mittleren Drehposition des ersten Spannarms nicht oder geringer vorgespannt wird als in den von der mittleren Drehposition abweichenden Drehpositionen. Es ist auch möglich, dass die Ausnehmung derart gestaltet ist, dass über einen mittleren Drehpositionsbereich, der die mittlere Drehposition umfasst, keine oder nur eine geringere Vorspannung anliegt als in Drehpositionen außerhalb des mittleren Drehpositionsbereichs.

Das Federelement kann hierbei radial federnd ausgebildet sein. Das Federelement kann darüber hinaus auch Bestandteil einer Spannanordnung sein, wobei das Federelement ein Dämpfungselement radial federnd abstützt und das Dämpfungselement zumindest einen Teil einer der Lagerflächen bildet.

Über den Umfang können auch mehrere Dämpfungsmittel angeordnet sein.

In einer Ausgestaltung der Riemenspannvorrichtung können die Dämpfungsmittel derart ausgelegt sein, dass sie in einer mittleren Drehposition des ersten Spannarms relativ zum Grundkörper bei einem Schwenken des ersten Spannarms relativ zum Grundkörper ein Dämpfungsmoment erzeugen, das kleiner ist als das Dämpfungsmoment in zumindest einer zur mittleren Drehposition abweichenden ausgeschwenkten Drehposition des ersten Spannarms relativ zum Grundkörper.

Die mittlere Drehposition des ersten Spannarms relativ zum Grundkörper kann beispielsweise als diejenige Drehposition ermittelt oder definiert werden, welche sich im Einbauzustand des Riemenspanners im Riementrieb aufgrund des Kräftegleichgewichts der auf den Riemenspanner wirkenden Kräfte einstellt, insbesondere wenn der Riemenantrieb nicht angetrieben ist. Diese Drehposition kann entsprechend auch als normale oder neutrale Drehposition bezeichnet werden. Bei einem Riementrieb für einen Startergenerator kann der Startergenerator in einem Normalbetrieb vom Riementrieb abgekoppelt sein, um möglichst wenig Schleppmomente zu erzielen, die zu einem erhöhten Kraftstoffverbrauch führen würden. In diesem Normalbetrieb werden die Spannarme zumindest annähernd ihre jeweilige mittlere Drehposition einnehmen.

Um in dieser mittleren Drehposition, insbesondere im Normalbetrieb bei abgekoppelten Startergenerator, möglichst geringe Momente zu erzeugen, ist das bei einem Schwenken des ersten Spannarms relativ zum Grundkörper erzeugte Dämpfungsmoment in der mittleren Drehposition kleiner als in zur mittleren Drehposition abweichenden ausgeschwenkten Drehpositionen.

Die ausgeschwenkten Drehpositionen werden insbesondere beim Starten des Motors oder im Boost-Betrieb, bei dem der Startergenerator als Elektromotor betrieben wird und zusätzliche Energie bereitstellt, oder im Rekuperationsbetrieb, in dem der Startergenerator als Generator betrieben wird, von der Riemenspannvorrichtung eingenommen.

In einem Ausführungsbeispiel der Riemenspannvorrichtung bestehen zwischen der Lagerfläche des Grundkörpers und der Lagerfläche des ersten Spannarms über den Umfang unterschiedliche Reibwerte.

Im Einbauzustand der Riemenspannvorrichtung in einem Riementrieb wirken Radialkräfte von dem ersten Spannarm auf das Gehäuse radial zur ersten Schwenkachse. Sofern die Lagerfläche des Grundkörpers und die Lagerfläche des ersten Spannarms Zylinderflächen um die erste Schwenkachse sind, wird das bei einem Schwenken des ersten Spannarms erzeugte Dämpfungsmoment von der Reibpaarung der Lagerflächen im von den Radialkräften höchstbelasteten Bereichen bestimmt. Die Lagerfläche des Grundkörpers ist ortsfest angeordnet. Zum Beispiel kann der Grundkörper an einem Aggregat, wie beispielsweise dem Startergenerator, befestigt sein. Die Lagerfläche des Grundkörpers bleibt somit gegenüber dem Riementrieb in seiner Lage unverändert. Hingegen ändert sich die Drehposition der Lagerfläche des ersten Spannarms, sobald der erste Spannarm geschwenkt wird. Die von dem ersten Spannarm ausgeübte Radialkraft dreht sich mit dem ersten Spannarm relativ um Grundkörper, sodass in den unterschiedlichen Drehpositionen des ersten Spannarms gegenüber dem Grundkörper unterschiedliche Bereiche der Lagerfläche des Grundkörpers am höchsten belastet sind. Da über den Umfang unterschiedliche Reibwerte bestehen, kann somit für die unterschiedlichen Drehpositionen des ersten Spannarms gegenüber dem Grundkörper unterschiedliche Reibwerte realisiert werden, sodass unterschiedliche Dämpfungsmomente entstehen.

Die unterschiedlichen Reibwerte können dadurch erzielt werden, dass über den Umfang unterschiedliche Materialien entlang der Lagerflächen des Grundkörpers und/oder der Lagerfläche des ersten Spannarms eingesetzt werden. Ebenso kann alternativ oder zusätzlich die Oberflächenbeschaffenheit der Lagerflächen über den Umfang unterschiedlich gestaltet sein, wie beispielsweise die Rauheitswerte.

Die Lagerfläche des Grundkörpers und die Lagerfläche des ersten Spannarms können auch in einer Ebene quer zur ersten Schwenkachse angeordnet sein. In der Einbaulage der Riemenspannvorrichtung in einem Riementrieb wird auch eine Axialkraft auf den Grundkörper ausgeübt, die parallel zur ersten Schwenkachse verläuft und somit ein Kippmoment quer zur ersten Schwenkachse entstehen lässt. Dieses Kippmomenten wird von den Lagerflächen, die quer zur ersten Schwenkachse orientiert sind, abgestützt, in dem in einem Umfangsbereich einer Axialkraft in einer ersten Richtung parallel zur ersten Schwenkachse abgestützt wird und in einer diametral zur ersten Schwenkachse gegenüberliegenden Seite eine zweiten Stützkraft in entgegengesetzter Richtung abgestützt wird. In diesen beiden hoch belasteten Bereichen definieren die Oberflächenpaarungen der Lagerflächen des Grundkörpers und des ersten Spannarms das entstehende Dämpfungsmoment, sodass hier dasselbe gilt, wie bei Lagerflächen, die zylinderförmig gestaltet und angeordnet sind.

Die Dämpfungsmittel können auch derart ausgebildet sein, dass bei einem Schwenken des ersten Spannarms relativ zum Grundkörper ausgehend von einer mittleren Drehposition des ersten Spannarms relativ zum Grundkörper in Richtung einer von der mittleren Drehposition abweichenden ausgeschwenkten Drehposition ein höheres Dämpfungsmoment erzeugen als bei einem Schwenken des ersten Spannarms relativ zum Grundkörper ausgehend von einer ausgeschwenkten Drehposition des ersten Spannarms relativ zum Grundkörper in Richtung zur mittleren Drehposition.

Somit wird gewährleistet, dass beim Ausschwenken des ersten Spannarms aus der mittleren Drehposition ein höheres Dämpfungsmoment erzeugt wird, als beim Zurückschwenken aus einer ausgeschwenkten Drehposition in Richtung zur mittleren Drehposition. Damit wird einem Überschwingen des ersten Spannarms in Richtung zu einer ausgeschwenkten Drehposition entgegen gewirkt, wohingegen dem Zurückschwenken in die mittlere Drehposition ein geringeres (oder kein) Dämpfungsmoment entgegengesetzt wird.

In einem weiteren Ausführungsbeispiel ist vorgesehen, dass ein Dämpfungselement radial zwischen dem Grundkörper und dem ersten Spannarm angeordnet ist und mit einem von dem Grundkörper und dem ersten Spannarm drehfest gehalten ist, und dass das Dämpfungselement in einer ersten Schwenkrichtung des ersten Spannarms relativ zum Grundkörper radial verspannt und in einer der ersten Schwenkrichtung entgegengesetzten zweiten Schwenkrichtung radial freigebend angeordnet ist.

Somit wird ein unterschiedliches Dämpfungsmoment in Abhängigkeit der Drehrichtung des ersten Spannarms gegenüber dem Grundkörper erzielt.

Ein solches Dämpfungselement, welches eine drehrichtungsabhängige Variabilität des Dämpfungsmoments ermöglicht, kann auch zusätzlich zu einem der oben genannten Ausführungsbeispiele mit von der Drehposition abhängigem Dämpfungsmoment eingesetzt werden.

Der zweite Spannarm kann vergleichbar zum ersten Spannarm am Grundkörper schwenkbar gelagert sein, wobei weitere Dämpfungsmittel zwischen dem Grundkörper und dem zweiten Spannarm wirksam angeordnet sind, um eine relative Drehbewegung zwischen den zweiten Spannarm und dem Grundkörper zu dämpfen. Grundsätzlich können die Dämpfungsmittel identisch zu denen aufgebaut sein, die vorangehend im Zusammenhang mit dem ersten Spannarm beschrieben sind.

Alternativ kann der zweite Spannarm am ersten Spannarm um die zweite Schwenkachse schwenkbar gelagert sein, sodass diese als Baueinheit zusammen über den ersten Spannarm am Grundkörper schwenkbar gelagert sind. Hierbei können weitere Dämpfungsmittel zwischen dem ersten Spannarm und dem zweiten Spannarm wirksam angeordnet sein, um eine relative Drehbewegung zwischen dem ersten Spannarm und dem zweiten Spannarm zu dämpfen. Die Dämpfungsmittel zwischen dem ersten Spannarm und dem zweiten Spannarm können hierbei genauso aufgebaut sein, wie die vorangehend beschriebenen Dämpfungsmittel zwischen dem ersten Spannarm und dem Grundkörper.

Somit dämpfen die Dämpfungsmittel zwischen dem ersten Spannarm und dem Grundkörper eine Schwenkbewegung der Baueinheit aus erstem Spannarm und zweitem Spannarm gegenüber dem Grundkörper, unabhängig davon, ob eine relative Drehbewegung zwischen dem ersten Spannarm und dem zweiten Spannarm stattfindet. Damit werden in unterschiedlichen Betriebszuständen, wie Startbetrieb, Normalbetrieb und Rekuperationsbetrieb, Drehbewegungen und Schwingungen der beiden Spannarme relativ zum Grundkörper gedämpft.

Die weiteren Dämpfungsmittel zwischen dem ersten Spannarm und dem zweiten Spannarm dämpfen eine relative Drehbewegung zwischen dem ersten Spannarm und dem zweiten Spannarm bei auftretenden Spannkraftveränderungen bzw. Schwingungen der Spannkraft.

Bevorzugte Ausführungsbeispiel werden anhand der Figuren im Folgenden näher erläutert. Hierin zeigt
- Figur 1: eine perspektivische Darstellung eines Riementriebs mit einer Riemenspannvorrichtung im Einbauzustand,
- Figur 2: eine Frontansicht einer schematischen Darstellung des Riementriebs gemäß Figur 1 in einem Startbetrieb,
- Figur 3: eine Frontansicht einer schematischen Darstellung des Riementriebs gemäß Figur 1 in einem Normalbetrieb,
- Figur 4: eine Frontansicht einer schematischen Darstellung des Riementriebs gemäß Figur 1 in einem Rekuperationsbetrieb,
- Figur 5: ein Diagramm des Verlaufs des Dämpfmoments über der Drehposition des ersten Spannarms,
- Figur 6: eine perspektivische Explosionsdarstellung einer ersten Ausführungsform einer Riemenspannvorrichtung,
- Figur 7: einen Querschnitt der Riemenspannvorrichtung gemäß Figur 6,
- Figur 8: einen vergrößerten Ausschnitt des Querschnitts der Riemenspannvorrichtung gemäß Figur 7 im Bereich von Dämpfungsmitteln in einer mittleren Drehposition,
- Figur 9: einen vergrößerten Ausschnitt des Querschnitts der Riemenspannvorrichtung gemäß Figur 7 im Bereich von Dämpfungsmitteln in einer ausgerückten Drehposition,
- Figur 10: eine perspektivische Explosionsdarstellung einer zweiten Ausführungsform einer Riemenspannvorrichtung,
- Figur 11: einen Querschnitt der Riemenspannvorrichtung gemäß Figur 10,
- Figur 12: einen vergrößerten Ausschnitt des Querschnitts der Riemenspannvorrichtung gemäß Figur 10 im Bereich von Dämpfungsmitteln in einer mittleren Drehposition,
- Figur 13: eine perspektivische Explosionsdarstellung einer dritten Ausführungsform einer Riemenspannvorrichtung,
- Figur 14: einen schematischen Querschnitt der Riemenspannvorrichtung gemäß Figur 13,
- Figur 15: einen Querschnitt einer nicht erfindungsgemäßen vierten Ausführungsform einer Riemenspannvorrichtung,
- Figur 16: eine perspektivische Explosionsdarstellung einer nicht erfindungsgemäßen fünften Ausführungsform einer Riemenspannvorrichtung, wobei diese Ausführungsform mit einer erfindungsgemäßen Ausführungsform kombiniert werden kann,
- Figur 17: einen Teilquerschnitt der Riemenspannvorrichtung gemäß Figur 16, und
- Figur 18: einen schematischen Querschnitt einer nicht erfindungsgemäßen sechsten Ausführungsform einer Riemenspannvorrichtung, wobei diese Ausführungsform mit einer erfindungsgemäßen Ausführungsform kombiniert werden kann.

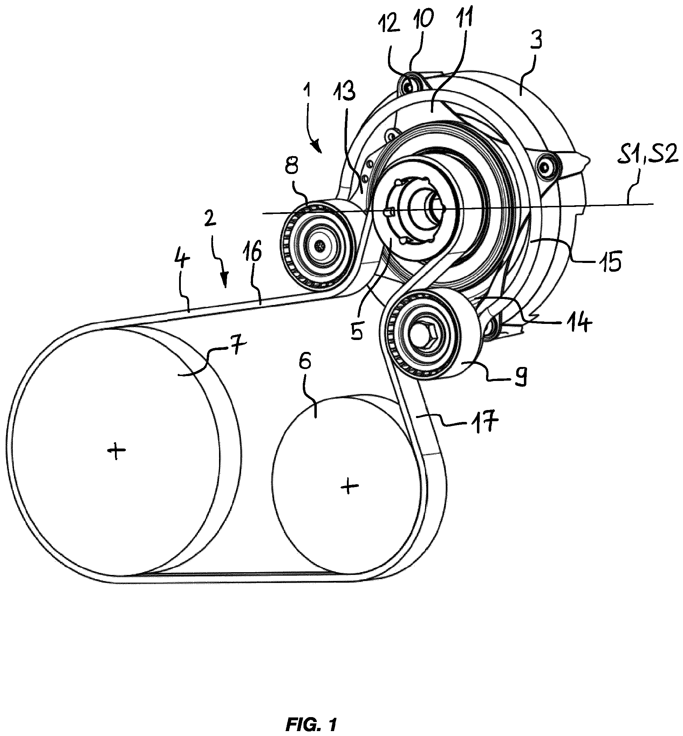

Figur 1 zeigt eine erfindungsgemäße Riemenspannvorrichtung 1 in einem eingebauten Zustand in einem schematisch und vereinfacht dargestellten Riementrieb 2. Hierfür wird die Riemenspannvorrichtung 1 an einem ortsfesten Bauteil, vorliegend an ein Aggregat in Form eines Startergenerators 3 (hier teilweise dargestellt) befestigt. Ein Riemen 4 des Riementriebs 2 ist um Riemenscheiben 5, 6, 7 gelegt. Spannrollen 8, 9 sind unter Federvorspannung gegen den Riemen 4 beaufschlagt. Die Riemenspannvorrichtung 1 ist stirnseitig an dem Startergenerator 3 angebracht. Dies erfolgt mittels umfangsverteilter Befestigungslaschen 10 eines Grundkörpers 11, wobei Schrauben 12 durch Bohrungen der Befestigungslaschen 10 hindurchgesteckt und mit dem Startergenerator 3 verschraubt sind.

An dem Grundkörper 11 ist ein erster Spannarm 13 um eine erste Schwenkachse S1 schwenkbar gelagert, wobei der erste Spannarm 13 die erste Spannrolle 8 mit radialem Abstand zur ersten Schwenkachse S1 trägt. Ferner weist die Riemenspannvorrichtung 1 einen zweiten Spannarm 14 auf, der relativ zum Grundkörper 11 am ersten Spannarm 13 um eine zweite Schwenkachse S2 schwenkbar gelagert ist und die zweite Spannrolle 9 mit radialem Abstand zur zweiten Schwenkachse S2 trägt. In dem gezeigten Ausführungsbeispiel sind die erste Schwenkachse S1 und die zweite Schwenkachse S2 koaxial zueinander angeordnet. Ferner ist eine der Riemenscheiben 5, die vom Startergenerator 3 angetrieben wird oder diesen antreibt, koaxial zu den Schwenkachsen S1, S2 drehbar gelagert.

Zwischen dem ersten Spannarm 13 und dem zweiten Spannarm 14 ist eine Federanordnung mit einer Feder 15 angeordnet, über die der erste Spannarm 13 und der zweite Spannarm 14 in Umfangsrichtung um die Schwenkachsen S1, S2 federnd gegeneinander abgestützt sind. In dem gezeigten Einbauzustand sind die Spannrollen 8, 9 gegen unterschiedliche Trume 16, 17 des Riemenantriebs 4 nach innen mit Kraft beaufschlagt, um den Riemen 4 zu spannen.

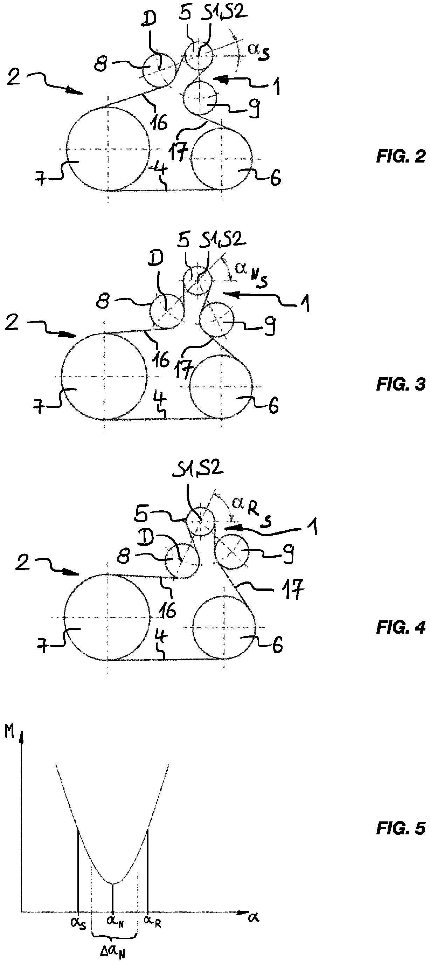

Figur 2 zeigt eine Frontansicht einer schematischen Darstellung des Riementriebs 2 gemäß Figur 1 in einem Startbetrieb. In dem Startbetrieb treibt der hier nicht dargestellte Startergenerator den Riementrieb 2 über eine erste Riemenscheibe 5 der drei Riemenscheiben 5, 6, 7 des Riementriebs 2 im Uhrzeigersinn an. Ein erstes Trum 16 des Riemens 4, das von der ersten Spannrolle 8 gespannt wird, ist hierbei das Zugtrum und ein zweites Trum 17, das von der zweiten Spannrollen 9 gespannt wird, ist das Lostrum.

Figur 3 zeigt denselben Riementrieb wie Figur 2 in einem Normalbetrieb. In dem Normalbetrieb ist der Startergenerator antriebsmäßig von dem Riementrieb 2 entkoppelt und beaufschlagt diesen daher nicht mit einem externen Drehmoment. In diesem Normalbetrieb nehmen die hier nicht dargestellten Spannarme der Riemenspannvorrichtung 1 jeweils eine mittlere Drehposition ein, die sich aufgrund des Kräftegleichgewichts einstellt. Bezüglich des ersten Spannarms mit der ersten Spannrolle 8 stellt sich in dem in Figur 3 dargestellten Beispiel zwischen einer Verbindungsgeraden von der ersten Schwenkachse S1 zu einer Drehachse D der ersten Spannrolle 8 und einer in der Figur 3 dargestellten horizontale Linie ein Winkel α_{N} ein, der der mittleren Drehposition des ersten Schwenkarms entspricht.

Dem gegenüber ist in dem Startbetrieb gemäß Figur 2 der erste Schwenkarm im Uhrzeigersinn verdreht, da aufgrund der höheren Trumkraft im ersten Trum 16, das das Zugtrum ist, der erste Spannarm von der ersten Spannrolle 8 im Uhrzeigersinn aus der in Figur 3 dargestellten mittleren Drehposition in eine in Figur 2 gezeigte ausgeschwenkten Drehposition geschwenkt wird. Hierbei stellt sich ein kleinerer Winkel α_{S} zwischen der Verbindungslinie und der horizontalen Linie ein, als im Normalbetrieb. Da die Vorspannkraft zum Spannen des Riemens 4 unverändert bleibt, dreht sich auch der zweite Spannarm mit der zweiten Spannrolle 9 im Uhrzeigersinn, ohne dass sich der Winkel zwischen den beiden Spannarmen ändert.

Figur 4 zeigt den Riementrieb 2 in einem Rekuperationsbetrieb, in dem der Startergenerator als Generator arbeitet und von dem Riementrieb 2 angetrieben wird. Im Rekuperationsbetrieb ist das zweite Trum 17 das Zugtrum und das erste Trum 16 das Lostrum. Daher werden die beiden Spannarme aufgrund der höheren Trumkräfte innerhalb des zweiten Trums 17 im Vergleich zum ersten Trum 16 gegen den Uhrzeigersinn verdreht, sodass sich ein Winkel α_{R} einstellt, der einer weiteren in Figur 4 dargestellten ausgeschwenkten Drehposition des ersten Spannarms entspricht und größer ist als der Winkel α_{N} im Normalbetrieb.

Figur 5 zeigt ein Diagramm des Verlaufs des Dämpfungsmoments M über dem Winkel α der Drehposition des ersten Spannarms. Im Normalbetrieb bei mittlerer Drehposition des ersten Spannarms stellt sich der Winkel α_{N} ein, bei dem das Dämpfungsmoment ein Minimum aufweist. Im Normalbetrieb entstehen Schwingungen, sodass der erste Spannarm innerhalb eines mittleren Drehpositionsbereichs über den Winkelbereich Δα_{N} um die mittlere Drehposition mit dem Winkel α_{N} schwingt. In von der mittleren Drehposition abweichenden Drehpositionen innerhalb des Drehpositionsbereichs steigt das Dämpfungsmoment bereits an. In der Drehposition mit dem Winkel α_{S} im Starterbetrieb ist das Dämpfungsmoment M noch weiter erhöht als im mittleren Drehpositionsbereich. Dasselbe trifft auch für die Drehposition mit dem Winkel α_{R} im Rekuperationsbetrieb zu.

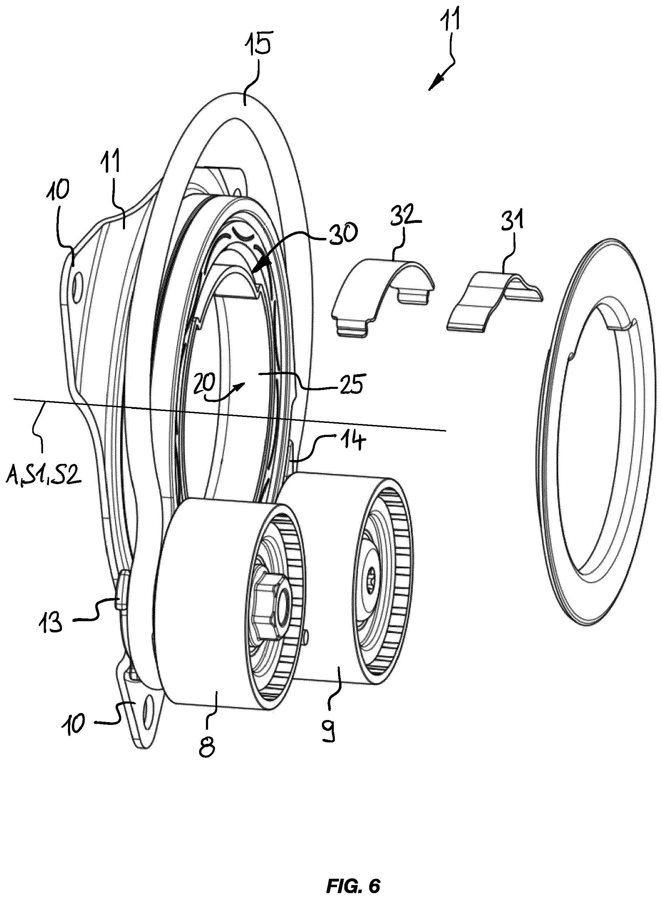

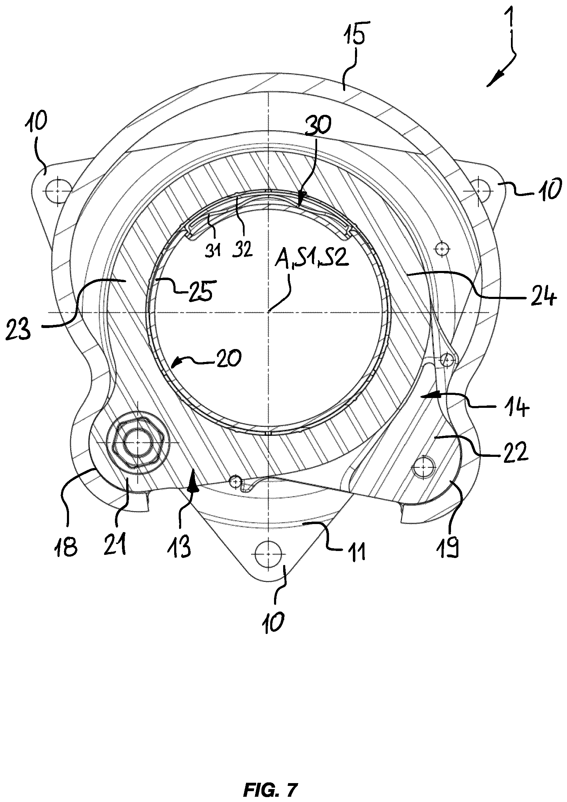

Die Figuren 6 bis 9, welche im Folgenden gemeinsam beschrieben werden, zeigen eine erste Ausführungsform einer Riemenspannvorrichtung 1 in verschiedenen Darstellungen. Die Riemenspannvorrichtung 1 umfasst einen Grundkörper 11, einen ersten Spannarm 13 mit einer ersten Spannrolle 8, einen zweiten Spannarm 14 mit einer zweiten Spannrolle 9 und eine Federanordnung mit einer Feder 15, über welche die beiden Spannarme 13, 14 in Umfangsrichtung gegeneinander federnd abgestützt sind. Die Feder 15 erstreckt sich zwischen einer ersten Federabstützung 18 des ersten Spannarms 13 und einer zweiten Federabstützung 19 des zweiten Spannarms 14 in Umfangsrichtung um eine Achse Ader Riemenspannanordnung 1.

Der Grundkörper 11 kann an einem ortsfesten Bauteil wie einem Aggregat, zum Beispiel in Form eines Startergenerators eines Hauptmotors eines Kraftfahrzeugs, befestigt werden. Das Aggregat kann prinzipiell jede Maschine sein, die Teil des Riementriebes ist, das heißt insbesondere jedes der vom Hauptmotor des Kraftfahrzeugs angetriebenen Nebenaggregate wie Generator, Wasserpumpe oder dergleichen. Zur Verbindung mit dem ortsfesten Bauteil hat der Grundkörper 11 Befestigungslaschen 10, die mit Bohrungen gestaltet sind, durch die Schrauben zur Befestigung an dem ortsfesten Bauteil durchgesteckt werden können.

Die beiden Spannarme 13, 14 der Riemenspannvorrichtung 1 sind über entsprechende Lagermittel gegeneinander beziehungsweise gegenüber dem Grundkörper 11 jeweils um eine erste Schwenkachse S1 bzw. eine zweite Schwenkachse S2 schwenkbar bzw. drehbar gelagert. Der Grundkörper 11, der erste Spannarm 13 und/oder der zweite Spannarm 14 können als Stahlbauteile, die insbesondere umformend aus Blech hergestellt werden können, oder Leichtmetallbauteile, insbesondere aus einer Aluminiumgusslegierung, oder aus Kunststoff, insbesondere einem faserverstärkten Kunststoff, hergestellt sein.

Der erste Spannarm 13 ist mittels eines ersten Lagers um die erste Schwenkachse S1 schwenkbar gelagert. Der zweite Spannarm 14 ist mittels eines zweiten Lagers um die zweite Schwenkachse S2 schwenkbar gelagert. Vorliegend sind die beiden Lager koaxial zueinander angeordnet, das heißt die beiden Schwenkachsen S1, S2 fallen zusammen. Grundsätzlich ist es jedoch für bestimmte Anwendungen auch denkbar, dass die beiden Schwenkachsen parallel beziehungsweise exzentrisch zueinander angeordnet sein können.

Die sich in Umfangsrichtung um die Schwenkachsen S1, S2 erstreckende Feder 15 wirkt einer relativen Schwenkbewegung der beiden Spannarme 13, 14 entgegen. Die beiden Spannarme 13, 14 sind durch die zwischengeschaltete Feder 15 relativ zueinander begrenzt drehbar und können zusammen mit der Feder 15 gegenüber dem Grundkörper 1 um die Schwenkachsen S1, S2 frei drehen, das heißt um 360° und mehr. Es ist vorgesehen, dass die Schwenkachsen S1, S2 in montiertem Zustand der Riemenspannvorrichtung 1 innerhalb einer Öffnung 20 des Grundkörpers 11 liegen.

Die Spannarme 13, 14 haben jeweils einen Trägerabschnitt 21, 22, der von einem Ringabschnitt 23, 24 des jeweiligen Spannarms 4, 6 nach radial außen vorsteht. An den Trägerabschnitten 21, 22 ist jeweils eine der Spannrollen 8, 9 um zumindest im Wesentlichen parallele Drehachsen D1, D2 drehbar gelagert.

Der Grundkörper 11 weist einen im Wesentlichen hülsenförmigen zentralen Ansatz 25 auf, der koaxial zur Achse A des Grundkörpers 11 angeordnet ist. Der zentrale Ansatz 25 erstreckt sich in Richtung der Achse A. Auf dem zentralen Ansatz 25 ist eine Lagerhülse 26 angeordnet und drehfest mit dem zentralen Ansatz 25 verbunden. Die Lagerhülse 26 bildet eine nach außen weisende äußere Lagerfläche 27 des zentralen Ansatzes 25.

Auf dem zentralen Ansatz 25 des Grundkörpers 11 und auf der Lagehülse 26 ist der Ringabschnitt 23 des ersten Spannarms 13 über ein Dämpfungselement 28 um die erste Schwenkachse S1 schwenkbar gelagert, wobei die erste Schwenkachse S1 mit der Achse A zusammenfällt. Das Dämpfungselement 28 ist hülsenförmig gestaltet und drehfest mit dem Ringabschnitt 23 des ersten Spannarms 13 verbunden. Das Dämpfungselement 28 bildet eine nach innen weisende innere Lagerfläche 29 des ersten Spannarms 13 auf, mit der das Dämpfungselement 28 auf der äußeren Lagerfläche 27 der Lagehülse 26 in Gleitkontakt steht und somit eine Lagerung bildet.

Über einen begrenzten Umfangsbereich sind in der Lagerung Dämpfungsmittel 33 vorgesehen. Hierzu bilden die Lagerhülse 26 und der zentrale Ansatz 25 eine über den Umfang begrenzt ausgedehnte Ausnehmung 30, die durch einen radial nach innen versetzten Abschnitt des zentralen Ansatzes 25 und der Lagerhülse 26 gebildet ist. In der Ausnehmung 30 sitzt ein radial federndes Federelement 31, welches radial zwischen der Lagehülse 26 und einem Dämpfungsblech 32 federnd abgestützt ist. Das Dämpfungsblech 32 bildet über seine Umfangserstreckung einen Teil der äußeren Lagerfläche 27, welche in Anlage zur inneren Lagerfläche 29 des Dämpfungselements 28 kommt.

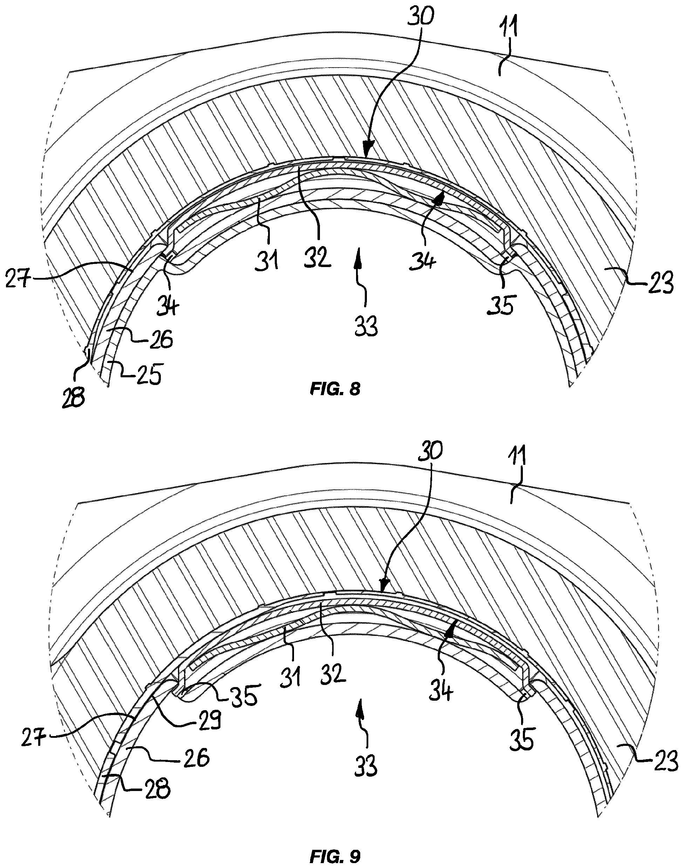

In Figur 8 ist die Riemenspannvorrichtung 1 in der Neutralstellung gezeigt. In dieser mittleren Drehpositionen des ersten Spannarms 13 ist das Dämpfungselement 28 in radialer Richtung über die Umfangserstreckung der Ausnehmung 30 dünner ausgestaltet, als in den übrigen Bereichen und bildet somit eine gegenüber der inneren Lagerfläche 29 zurückversetzte Ausnehmung 34. In der in Figur 8 dargestellten mittleren Drehposition des ersten Spannarms 13 ist die Ausnehmung 34 des Dämpfungselements 28 in Überdeckung mit der Ausnehmung 30 der Lagehülse 26. Das Federelement 21 ist somit maximal entspannt und beaufschlagt das Dämpfungsblech 32 radial nach außen in Richtung zum Dämpfungselement 28. Im vorliegenden Ausführungsbeispiel ist das Dämpfungsblech 32 an zwei Umfangsenden in Halteausnehmungen 35 aufgenommen, die eine radiale Verstellung des Dämpfungsblechs 32 begrenzen. In dem gezeigten Ausführungsbeispiel ist in der mittleren Drehposition des ersten Spannarms 13 das Dämpfungsblech 32 derart ausgelegt, dass es nicht in Anlage zum Dämpfungselement 28 gelangt. Grundsätzlich ist es jedoch auch möglich, dass in dieser mittleren Drehposition bereits eine Anlage zwischen dem Dämpfungsblech 32 und dem Dämpfungselement 28 erfolgt, wobei hierbei die Anpresskraft durch die Halteausnehmungen 35 begrenzt wird.

In der in Figur 9 dargestellten ausgeschwenkten Drehposition des ersten Spannarms ist der Ringabschnitt 23 des ersten Spannarms 13 gegenüber dem zentralen Ansatz 25 im Uhrzeigersinn gedreht. In dieser ausgeschwenkten Drehposition überlappen die Ausnehmung 30 der Lagerhülse 26 und die Ausnehmung 34 des Dämpfungselements 28 nur noch teilweise, sodass auch ein dickerer Bereich des Dämpfungselements 28 mit der Ausnehmung 30 der Lagehülse 26 überlappt. Dieser dickere Bereich des Dämpfungselements 28 drückt das Dämpfungsblech 32 gegen die Federkraft des Federelements 31 nach innen, wobei die äußere Lagerfläche des Dämpfungsblechs 32 in Anlage zur inneren Lagerfläche 29 des Dämpfungselements 28 gelangt und von dem Federelement 31 eingepresst wird, wodurch sich eine erhöhte Reibungskraft und damit ein erhöhtes Dämpfungsmoment gegenüber der Drehposition gemäß Figur 8 ergibt.

Der Ringabschnitt 24 des zweiten Spannarms 14 ist gegenüber dem Ringabschnitt 23 des ersten Spannarms 13 gelagert, wobei die Lagerung hier nicht im Einzelnen dargestellt ist. In dieser Lagerung können ebenfalls Dämpfungsmittel vorgesehen sein. Die gezeigten Dämpfungsmittel 33 zwischen dem zentralen Ansatz 25 des Grundkörpers 11 und dem Ringabschnitt 23 des ersten Spannarms 13 bewirken ein Dämpfungsmoment zum Dämpfen von Schwingungen zwischen der Baueinheit aus erstem Spannarm 13 und zweitem Spannarm 14 relativ zum Grundkörper 11. Eventuelle Dämpfungsmittel zwischen dem ersten Spannarm 13 und dem zweiten Spannarm 14 würden ein Dämpfungsmoment gegen Schwingungen zwischen den beiden Spannarmen 13, 14 erzeugen.

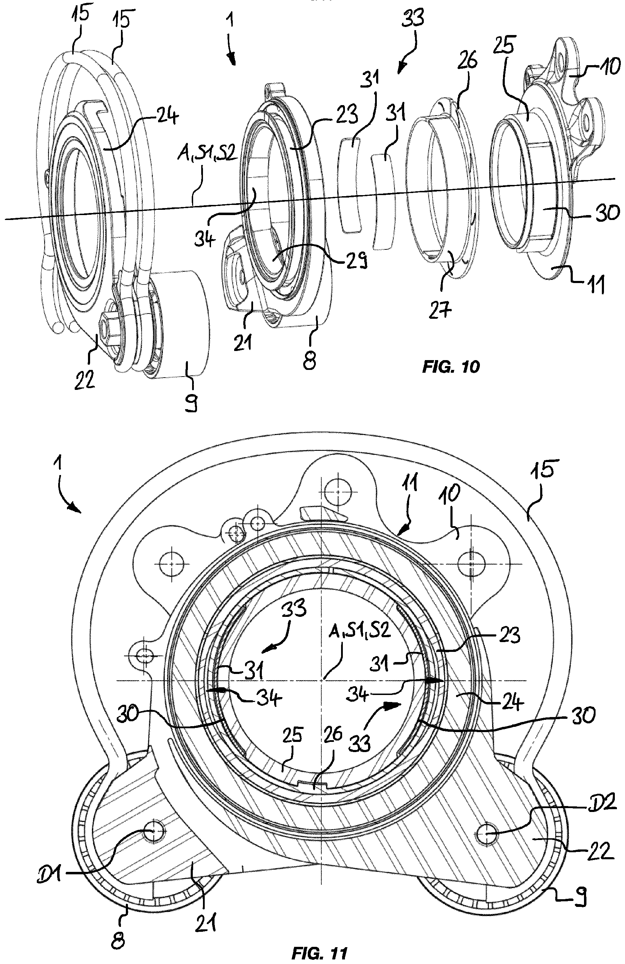

Die Figuren 10 bis 12, welche im Folgenden gemeinsam beschrieben werden, zeigen eine zweite Ausführungsform einer Riemenspannvorrichtung 1 in verschiedenen Darstellungen. Bauteile und Einzelheiten, die identisch zu denen der ersten Ausführungsform sind, sind mit denselben Bezugszeichen versehen und im Zusammenhang mit der ersten Ausführungsform beschrieben. Im Folgenden werden die wesentlichen Unterschiede der zweiten Ausführungsform gegenüber der ersten Ausführungsform beschrieben.

Im Wesentlichen entspricht die zweite Ausführungsform der Riemenspannvorrichtung 1 im Aufbau der ersten Ausführungsform. Im Unterschied zur ersten Ausführungsform weist die zweite Ausführungsform zwei Federn 15 auf, die in Achsrichtung der Achse A nebeneinander angeordnet sind. In dem hülsenförmigen zentralen Ansatz 25 des Grundkörpers 11 sind zwei zur Achse A diametral gegenüberliegende Ausnehmungen 30 vorgesehen, die sich jeweils über einen begrenzten Umfangsbereich erstrecken. In den Ausnehmungen 30 sitzt jeweils ein Federelement 31, welches radial federnd zwischen dem zentralen Ansatz 25 und der Lagerhülse 26 angeordnet ist. Die Lagerhülse 26 wird somit im Bereich der Federelemente 31 radiale nach außen mit Kraft beaufschlagt.

Der Ringabschnitt 23 des ersten Spannarms 13 weist hingegen im Unterschied zur ersten Ausführungsform kein Dämpfungselement auf sondern bildet unmittelbar die innere Lagerfläche 29. Die innere Lagerfläche 29 ist in Kontakt zur äußeren Lagerfläche 27 der Lagerbüchse 26 gehalten.

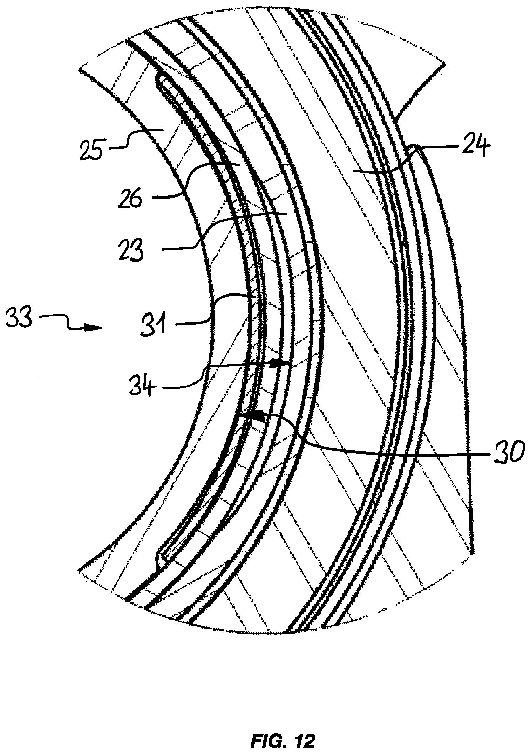

Der Ringabschnitt 23 des ersten Spannarms 13 weist zwei Ausnehmungen 34 auf, die nach innen in Richtung zur äußeren Lagerfläche 27 weisen. Die Ausnehmungen 34 sind zur Achse A diametral auf gegenüberliegenden Seiten des Ringabschnitts 23 des ersten Spannarms 13 angeordnet. In der in den Figuren 11 und 12 dargestellten mittleren Drehposition des ersten Spannarms 13 befinden sich die Ausnehmungen 34 jeweils in derselben Winkelposition um die Achse A wie jeweils eines der Federelemente 31. Somit wird die Lagerhülse 26 in der mittleren Drehposition des ersten Spannarms 13 in die Ausnehmungen 34 gedrückt bzw. geringfügig verformt. In dem gezeigten Ausführungsbeispiel befindet sich die äußere Lagerfläche 27 im Bereich der Federelemente 31 nicht in Kontakt zur inneren Lagerfläche 29.

In einer (nicht dargestellten) ausgeschwenkten Drehposition des ersten Spannarms 13 befinden sich die Ausnehmungen 24 in einer anderen Winkelposition als die Federelemente 31, sodass die Lagerhülse 26 in den Bereichen der Federelemente 31 von diesen mit Kraft gegen die äußere Lagerfläche 27 beaufschlagt wird, wodurch eine erhöhte Reibungskraft und damit ein erhöhtes Dämpfungsmoment erzeugt wird.

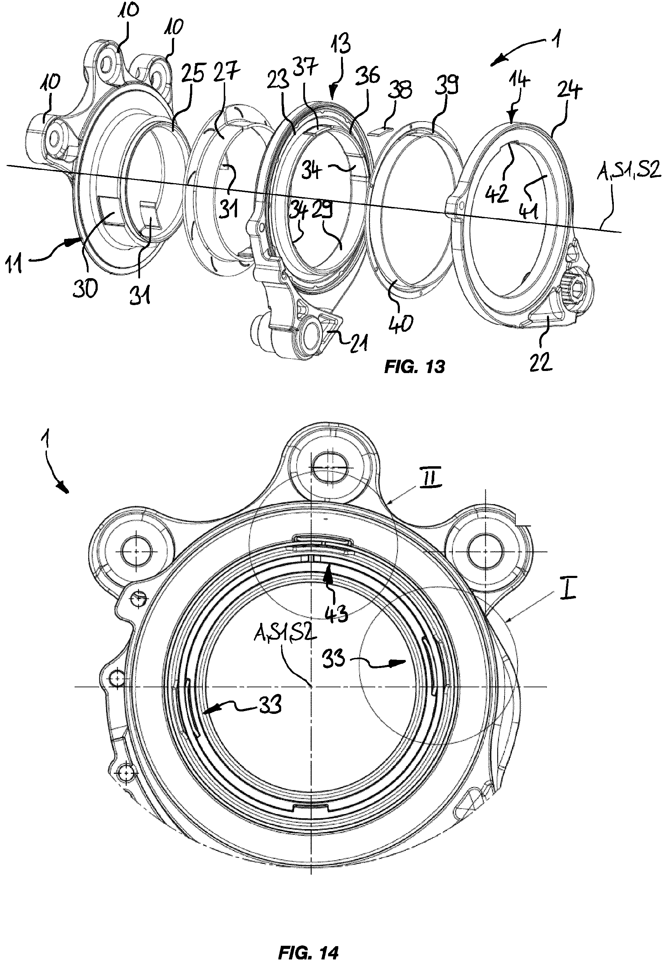

Die Figuren 13 und 14, welche im Folgenden gemeinsam beschrieben werden, zeigen eine dritte Ausführungsform einer Riemenspannvorrichtung 1 in verschiedenen Darstellungen. Bauteile und Einzelheiten, die identisch zu denen der ersten beiden Ausführungsformen sind, sind mit denselben Bezugszeichen versehen und im Zusammenhang mit den beiden ersten Ausführungsformen beschrieben. Im Folgenden werden die wesentlichen Unterschiede der dritten Ausführungsform gegenüber den ersten beiden Ausführungsformen beschrieben.

Im Wesentlichen entspricht die dritte Ausführungsform der Riemenspannvorrichtung 1 im Aufbau der zweiten Ausführungsform. Die dritte Ausführungsform weist zwei Federelemente 31 auf, die im Vergleich zu der zweiten Ausführungsform in Umfangsrichtung kürzerer ausgebildet sind. Im Übrigen ist die Funktion der Dämpfungsmittel 33 zwischen dem Grundkörper 11 und dem ersten Spannarm 13 identisch zu denen der zweiten Ausführungsform.

Der Ringabschnitt 23 des ersten Spannarms 13 weist einen zentralen Hülsenabschnitt 36 auf, der grundsätzlich vergleichbar zu dem zentralen Ansatz 25 des Grundkörpers 11 ist. Der Hülsenabschnitt 36 ist koaxial zur Achse A und den beiden Schwenkachsen S1 und S2 angeordnet. Der Hülsenabschnitt 36 ist mit einer nach außen weisenden Ausnehmung 37 versehen, die sich über einen Teil des Umfangs erstreckt. In der Ausnehmung 37 sitzt ein Federelement 38.

Auf dem Hülsenabschnitt 36 sitzt eine Lagerhülse 39, wobei das Federelement 38 zwischen dem Hülsenabschnitt 26 des ersten Spannarms 13 und der Lagerhülse 39 vorgespannt sitzt. Das Federelement 38 des ersten Spannarms 13 beaufschlagt somit die Lagerhülse 39 radial nach außen. Dies ist vergleichbar zu den Federelementen 31 am Grundkörper 11.

Eine äußere Lagerfläche 40 der Lagehülse 39 ist in gleitendem Kontakt zu einer inneren Lagerfläche 41 des Ringabschnitts 24 des zweiten Spannarms 14. Der Ringabschnitt 24 des zweiten Spannarms 14 weist eine Ausnehmung 24 auf, die von der inneren Lagerfläche 41 ausgeht und in einer mittleren Drehposition des ersten Spannarms 13 relativ zum zweiten Spannarm 14 in einer Winkelposition angeordnet ist, in der sie in Überdeckung zu dem Federelement 38 des ersten Spannarms 13 ist. Somit wird der Bereich der Lagerhülse 39, der von dem Federelement 38 radial federnd beaufschlagt wird, in Richtung zur Ausnehmung 32 des Ringabschnitt 24 des zweiten Spannarms 14 verformt. In von der mittleren Drehposition abweichenden Positionen wird die Lagerhülse 39 im Bereich des Federelements 38 des ersten Spannarms 13 gegen die innere Lagerfläche 41 mit Kraft beaufschlagt und erzeugt somit eine erhöhte Reibkraft und damit ein erhöhtes Dämpfungsmoment.

Die Dämpfungsmittel 33 gemäß der Einzelheit I in Figur 14 und die diametral gegenüberliegenden Dämpfungsmittel 33 dämpfen somit eine Schwingung der Einheit aus erstem Spannarm 13 und zweitem Spannarm 14 relativ zum Grundkörper 11. Die Dämpfungsmittel 43 gemäß der Einzelheit II in Figur 14 dämpfen eine Schwingungsbewegung zwischen den beiden Spannarmen 13, 14 zueinander.

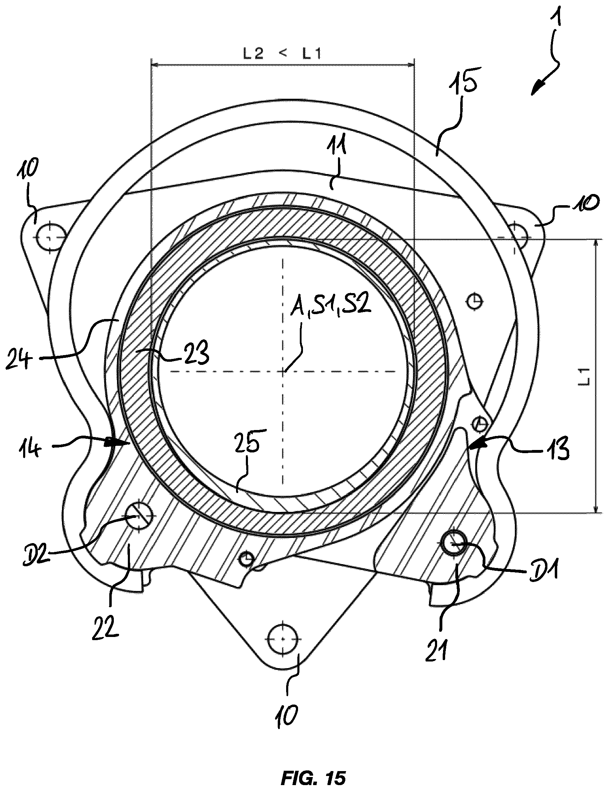

Figur 15 zeigt den schematischen Querschnitt einer vierten Ausführungsform einer Riemenspannvorrichtung 1, wobei Bauteile und Einzelheiten, die identisch zu denen der vorhergehenden Ausführungsformen sind, mit denselben Bezugszeichen versehen und im Zusammenhang mit den vorangehenden Ausführungsformen beschrieben sind. Im Folgenden werden die wesentlichen Unterschiede der vierten Ausführungsform gegenüber den vorangehenden Ausführungsformen erläutert.

Im Unterschied zu den vorhergehenden Ausführungsformen ist zwischen dem Grundkörper 11 und dem ersten Spannarm 13 kein Federelement vorgesehen. Hingegen weisen die äußere Lagerfläche 27 des zentralen Ansatz 25 und die innere Lagerfläche 29 des Ringabschnitt 23 des ersten Spannarms 13 eine ovale Form auf, sodass diese in einer in Figur 15 dargestellten vertikalen Richtung eine Länge L1 aufweisen, die größer ist als eine horizontale Länge L2, jeweils quer zur Achse A gesehen. In der mittleren Drehposition des ersten Spannarms 13 sind die äußere Lagerfläche 27 und die innere Lagerfläche 29 identisch zueinander ausgerichtet. In von der mittleren Drehposition abweichenden Drehpositionen werden die elliptisch geformten Lagerflächen 27, 29 zueinander verdreht, sodass sich bereichsweise das Lagerspiel reduziert und Reibungskräfte erhöht werden, was zu einem erhöhten Dämpfungsmoment führt.

Alternative Möglichkeiten, die zu demselben Resultat führen, können gegenläufige Rampenflächen auf den zumindest im Wesentlichen zylindrischen Lagerflächen sein. Rampenflächen können auch an Stirnflächen des Grundkörpers 11 und des Ringabschnitts 23 des ersten Spannarms 13 angeordnet sein, die miteinander in Anlage kommen.

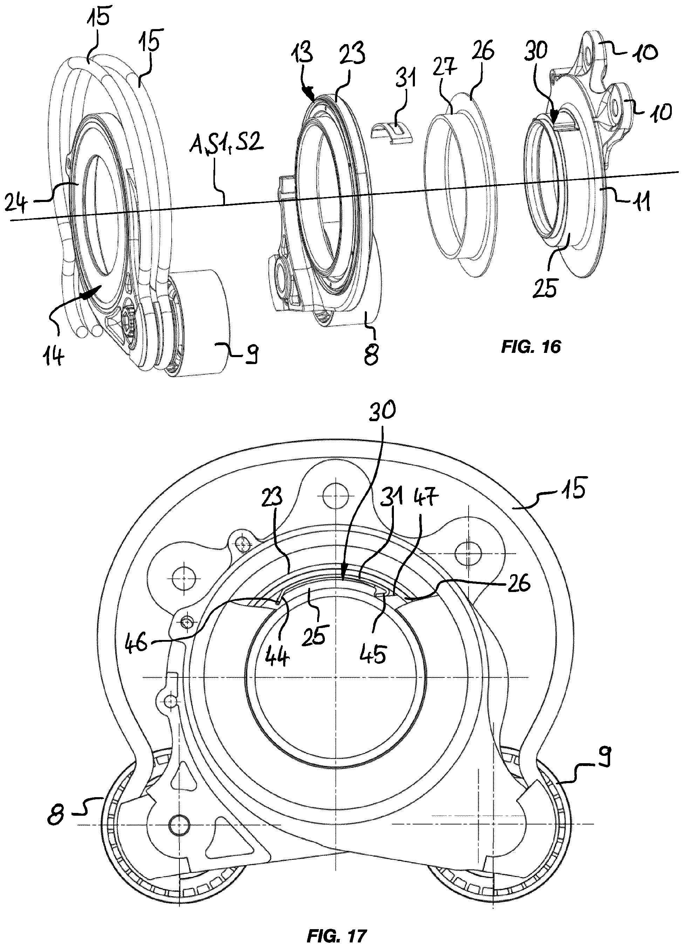

Die Figuren 16 und 17, welche im Folgenden gemeinsam beschrieben werden, zeigen eine fünfte Ausführungsform einer Riemenspannvorrichtung 1 in verschiedenen Darstellungen. Bauteile und Einzelheiten, die identisch zu denen der ersten oder zweiten Ausführungsform sind, sind mit denselben Bezugszeichen versehen und im Zusammenhang mit der ersten und zweiten Ausführungsform beschrieben. Im Folgenden werden die wesentlichen Unterschiede erläutert.

Der zentrale Ansatz 25 weist eine Ausnehmung 30 auf, in der ein Federelement 31 sitzt. Das Federelement ist radial federnd gegen die Lagerhülse 26 abgestützt, die mit der äußeren Lagerfläche 27 in Reibkontakt zur inneren Lagerfläche 29 des Ringabschnitts 23 des ersten Spannarms 13 ist.

Das Federelement 31 weist an seinen in Umfangsrichtung gesehenen Enden jeweils einen Rampenabschnitt 44, 45 auf, die in Gleitkontakt zu Rampenflächen 46, 47 der Ausnehmung 30 des zentralen Ansatz 25 sind. Die Rampenabschnitte 44, 45 und die Rampenflächen 46, 47 sind derart gestaltet, dass bei einer Schwenkbewegung des ersten Spannarms 13 entgegen dem Uhrzeigersinn in Figur 17 das Federelement 31 tiefer in die Ausnehmung 30 gedrückt wird und bei einer Drehbewegung im Uhrzeigersinn aus der Ausnehmung 30 gezogen wird und radial innen gegen die Lagerhülse 26 gedrückt wird, sodass sich gegenüber einer Drehbewegung entgegen dem Uhrzeigersinn erhöhte Lagerkräfte zwischen der inneren Lagerfläche 29 und der äußeren Lagerfläche 27 ergeben. Dies führt zu einem erhöhten Dämpfungsmoment. Somit können unterschiedliche Dämpfungsmomente bei unterschiedlichen Schwenkrichtungen erzielt werden.

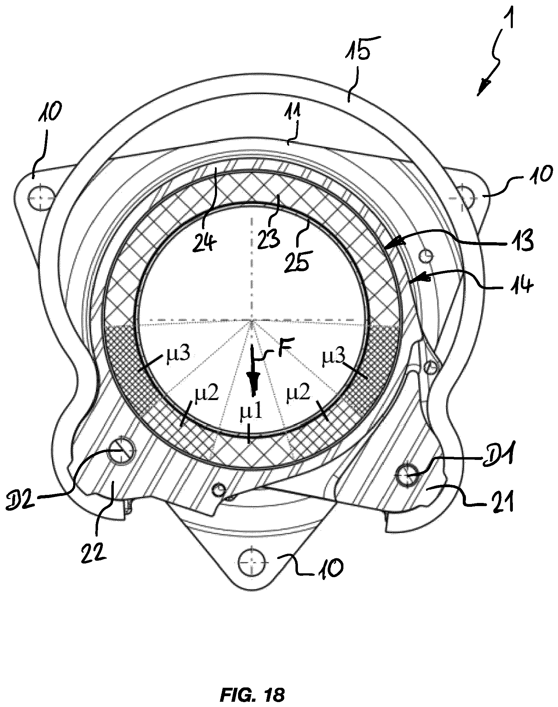

Figur 18 zeigt einen schematischen Querschnitt einer sechsten Ausführungsform einer Riemenspannvorrichtung, wobei Bauteile und Einzelheiten, die identisch zu den vorangehend beschriebenen Ausführungsformen sind, mit denselben Bezugszeichen versehen sind und im Zusammenhang mit den vorangehenden Ausführungsformen beschrieben sind. Im Folgenden werden die wesentlichen Unterschiede erläutert.

Die sechste Ausführungsform entspricht vom Aufbau her in etwa der vierten Ausführungsform, wobei die Lagerflächen 27, 29 kreiszylindrisch ausgebildet sind. Die äußere Lagerfläche 27 des zentralen Ansatzes 25 und/oder die innere Lagerfläche 29 des ersten Spannarms 13 bzw. dessen Lagerhülse weisen über den Umfang variierende Oberflächeneigenschaften auf, sodass zwischen den Lagerflächen variierende Reibwerte entstehen. Dies kann zum Beispiel durch variierende Materialien oder Oberflächenrauheiten erzielt werden.

Im Einbauzustand der Riemenspannvorrichtung 1 wird eine Radialkraft in Richtung des Kraftpfeils F erzeugt, welche auf die Lagerflächen 27, 29 wirkt. Dies bedeutet, dass der Bereich der Lagerflächen 27, 29, welche in Richtung der Kraft F ausgerichtet sind, einen höheren Einfluss auf Reibkräfte haben, als Bereiche quer zur Kraftrichtung. Im vorliegenden Beispiel ist über einen Winkelbereich um die Kraftrichtung F ein Reibwert µ1 realisiert. Links und rechts daran anschließend ist ein Reibwerte µ2 vorgesehen, der größer ist als der Reibwerte µ1. Weiter anschließend sind Bereiche mit wiederum erhöhten Reibwerten µ3 vorgesehen. Wenn der erste Schwenkarm 13 aus der in Figur 18 gezeigten mittleren Drehposition in eine ausgeschwenkten Drehposition geschwenkt wird, befindet sich einer der Bereiche mit den Reibwerte µ2 oder µ3 in Ausrichtung der Kraft F, sodass höhere Reibkräfte erzielt werden und damit höhere Dämpfungsmomente.

### Bezugszeichenliste

- 1: Riemenspannvorrichtung
- 2: Riementrieb
- 3: Startergenerator
- 4: Riemen
- 5: Riemenscheibe
- 6: Riemenscheibe
- 7: Riemenscheibe
- 8: Spannrolle
- 9: Spannrolle
- 10: Befestigungslasche
- 11: Grundkörper
- 12: Schraube
- 13: erster Spannarm
- 14: zweiter Spannarm
- 15: Feder
- 16: erster Trum
- 17: zweiter Trum
- 18: erste Federabstützung
- 19: zweite Federabstützung
- 20: Öffnung
- 21: Trägerabschnitt
- 22: Trägerabschnitt
- 23: Ringabschnitt
- 24: Ringabschnitt
- 25: zentraler Ansatz
- 26: Lagerhülse
- 27: äußere Lagerfläche
- 28: Dämpfungselement
- 29: innere Lagerfläche
- 30: Ausnehmung
- 31: Federelement
- 32: Dämpfungsblech
- 33: Dämpfungsmittel
- 34: Ausnehmung
- 35: Halteausnehmung
- 36: Hülsenabschnitt
- 37: Ausnehmung
- 38: Federelement
- 39: Lagerhülse
- 40: äußere Lagerfläche
- 41: innere Lagerfläche
- 42: Ausnehmung
- 43: Dämpfungsmittel
- 44: Rampenabschnitt
- 45: Rampenabschnitt
- 46: Rampenfläche
- 47: Rampenfläche

- A: Achse
- D: Drehachse
- D1: Drehachse der ersten Spannrolle
- D2: Drehachse der zweiten Spannrolle
- S1: erste Schwenkachse
- S2: zweite Schwenkachse

## Patentansprüche

1. Riemenspannvorrichtung (1) umfassend:
einen Grundkörper (11),
einen ersten Spannarm (13), der am Grundkörper (11) um eine erste Schwenkachse (S1) schwenkbar gelagert ist und der eine drehbare erste Spannrolle (8) aufweist,
einen zweiten Spannarm (14), der relativ zum Grundkörper (11) um eine zweite Schwenkachse (S2) schwenkbar gelagert ist und der eine drehbare zweite Spannrolle (9) aufweist,
eine Federanordnung (15), die zwischen dem ersten Spannarm (13) und dem zweiten Spannarm (14) angeordnet ist und über die der erste Spannarm (13) und der zweite Spannarm (14) in Umfangsrichtung federnd gegeneinander abgestützt sind, und
Dämpfungsmittel (33), die zwischen dem Grundkörper (11) und dem ersten Spannarm (13) wirksam angeordnet sind, um eine relative Drehbewegung zwischen dem ersten Spannarm (13) und dem Grundkörper (11) zu dämpfen,
wobei die Dämpfungsmittel (33) bei einem Schwenken des ersten Spannarms (13) relativ zum Grundkörper (11) ein von der Drehposition und/oder Drehrichtung des ersten Spannarms (13) relativ zum Grundkörper (11) abhängiges variierendes Dämpfungsmoment (M) erzeugen,
**dadurch gekennzeichnet,**
**dass** ein Federelement (31) radial zwischen dem Grundkörper (11) und dem ersten Spannarm (13) angeordnet ist, wobei das Federelement (31) am Grundkörper (11) drehfest gehalten ist und eine Ausnehmung (34) im ersten Spannarm (13) angeordnet ist oder das Federelement (31) am ersten Spannarm (13) drehfest gehalten ist und eine Ausnehmung (34) im Grundkörper (11) angeordnet ist,
**dass** das Federelement (31) in der mittleren Drehposition des ersten Spannarms (13) relativ zum Grundkörper (11) in Umfangsrichtung mit der Ausnehmung (34) in Überdeckung angeordnet ist, und
**dass** das Federelement (31) in einer von der mittleren Drehposition abweichenden ausgeschwenkten Drehposition des ersten Spannarms (13) relativ zum Grundkörper (11) vorgespannt und eine Radialkraft zwischen einer Lagerfläche des Grundkörpers (11) und einer Lagerfläche des ersten Spannarms (13) ausübend angeordnet ist.

2. Riemenspannvorrichtung nach Anspruch 1,
**dadurch gekennzeichnet,**
**dass** die Dämpfungsmittel (33) in einer mittleren Drehposition des ersten Spannarms (13) relativ zum Grundkörper (11) bei einem Schwenken des ersten Spannarms (13) relativ zum Grundkörper (11) ein Dämpfungsmoment (M) erzeugen, das kleiner ist als das Dämpfungsmoment (M) in zumindest einer zur mittleren Drehposition abweichenden ausgeschwenkten Drehposition des ersten Spannarms (13) relativ zum Grundkörper (11).

3. Riemenspannvorrichtung nach Anspruch 1 oder 2,
**dadurch gekennzeichnet,**
**dass** zwischen einer Lagerfläche (27) des Grundkörpers (11) und einer Lagerfläche (29) des ersten Spannarms (13) über den Umfang unterschiedliche Reibwerte bestehen.

4. Riemenspannvorrichtung nach einem der Ansprüche 1 bis 3,
**dadurch gekennzeichnet,**
**dass** die Dämpfungsmittel (33) bei einem Schwenken des ersten Spannarms (13) relativ zum Grundkörper (11) ausgehend von einer mittleren Drehposition des ersten Spannarms (13) relativ zum Grundkörper (11) in Richtung einer von der mittleren Drehposition abweichenden ausgeschwenkten Drehposition ein höheres Dämpfungsmoment (M) erzeugen als bei einem Schwenken des ersten Spannarms (13) relativ zum Grundkörper (11) ausgehend von einer ausgeschwenkten Drehposition des ersten Spannarms (13) relativ zum Grundkörper (11) in Richtung zur mittleren Drehposition.

5. Riemenspannvorrichtung nach einem der Ansprüche 1 bis 4,
**dadurch gekennzeichnet,**
**dass** ein Federelement (31) radial zwischen dem Grundkörper (11) und dem ersten Spannarm (13) angeordnet ist und mit einem von dem Grundkörper (11) und dem ersten Spannarm (13) drehfest gehalten ist, und
**dass** das Federelement (31) in einer ersten Schwenkrichtung des ersten Spannarms (13) relativ zum Grundkörper (11) radial verspannt und in einer der ersten Schwenkrichtung entgegengesetzten zweiten Schwenkrichtung radial freigebend angeordnet ist.

6. Riemenspannvorrichtung nach einem der Ansprüche 1 bis 5,
**dadurch gekennzeichnet,**
**dass** der zweite Spannarm (14) am ersten Spannarm (13) um die zweite Schwenkachse (S2) schwenkbar gelagert ist und
**dass** Dämpfungsmittel (43) zwischen dem ersten Spannarm (13) und dem zweiten Spannarm (14) wirksam angeordnet sind, um eine relative Drehbewegung zwischen dem ersten Spannarm (13) und dem zweiten Spannarm (14) zu dämpfen.

7. Riementrieb umfassend
einen Riemen (4), der mehrere Riemenscheiben (5, 6, 7) antreibend umschlingt, und
eine Riemenspannvorrichtung (1) gemäß einem der Ansprüche 1 bis 6 zum Spannen des Riemens (4),
wobei eine mittlere Drehposition des ersten Spannarms (13) relativ zum Grundkörper (11) diejenige Drehposition ist, welche sich im Stillstand im Einbauzustand aufgrund des Kräftegleichgewichts der auf die Riemenspannvorrichtung (1) wirkenden Kräfte einstellt.

## Claims

1. A belt tensioning device (1) comprising:
a base body (11),
a first tensioning arm (13) which is mounted on the base body (11) such that it can pivot about a first pivot axis (S1) and which has a rotatable first tensioning roller (8),
a second tensioning arm (14) which is pivotably mounted relative to the base body (11) about a second pivot axis (S2) and which has a rotatable second tensioning roller (9),
a spring arrangement (15) which is arranged between the first tensioning arm (13) and the second tensioning arm (14) and via which the first tensioning arm (13) and the second tensioning arm (14) are resiliently supported against one another in the circumferential direction, and
a damping mechanism (33) operatively arranged between the base body (11) and the first tensioning arm (13) for damping relative rotational movement between the first tensioning arm (13) and the base body (11),
wherein the damping mechanism (33) generates a varying damping torque (M) dependent on the rotational position and/or rotational direction of the first tensioning arm (13) relative to the base body (11) upon pivoting of the first tensioning arm (13) relative to the base body (11),
**characterized in**
**that** a spring element (31) is arranged radially between the base body (11) and the first tensioning arm (13), wherein the spring element (31) is held non-rotatably on the base body (11) and a recess (34) is arranged in the first tensioning arm (13) or the spring element (31) is held non-rotatably on the first clamping arm (13) and a recess (34) is arranged in the base body (11),
**that** the spring element (31) is arranged in overlap with the recess (34) in the circumferential direction in the central rotational position of the first tensioning arm (13) relative to the base body (11), and
**that**, in a pivoted-out rotational position of the first tensioning arm (13) relative to the base body (11) which differs from the central rotational position, the spring element (31) is pretensioned and is arranged exerting a radial force between a bearing surface of the base body (11) and a bearing surface of the first tensioning arm (13).

2. A belt tensioning device according to claim 1,
**characterized in**
**that**, in a central rotational position of the first tensioning arm (13) relative to the base body (11), when the first tensioning arm (13) is pivoted relative to the base body (11), the damping mechanism (33) generates a damping torque (M) which is smaller than the damping torque (M) in at least one pivoted-out rotational position of the first tensioning arm (13) relative to the base body (11) which differs from the central rotational position.

3. Belt tensioning device according to claim 1 or 2,
**characterized in**
**that** different friction values exist over the circumference between a bearing surface (27) of the base body (11) and a bearing surface (29) of the first tensioning arm (13).

4. Belt tensioning device according to one of claims 1 to 3,
**characterized in**
**that** the damping mechanism (33) generates a higher damping torque (M) when the first tensioning arm (13) is pivoted relative to the base body (11) starting from a central rotational position of the first tensioning arm (13) relative to the base body (11) in the direction towards a pivoted-out rotational position which deviates from the central rotational position than when the first tensioning arm (13) is pivoted relative to the base body (11) starting from a pivoted-out rotational position of the first tensioning arm (13) relative to the base body (11) in the direction towards the central rotational position.

5. Belt tensioning device according to one of claims 1 to 4,
**characterized in**
**that** a spring element (31) is arranged radially between the base body (11) and the first tensioning arm (13) and is held in a rotationally fixed manner by one of the base body (11) and the first tensioning arm (13), and
**that** the spring element (31) is radially pretensioned in a first pivoting direction of the first tensioning arm (13) relative to the base body (11) and is arranged so as to be radially free in a second pivoting direction opposite the first pivoting direction.

6. Belt tensioning device according to one of claims 1 to 5,
**characterized in**
**that** the second tensioning arm (14) is mounted on the first tensioning arm (13) such that it can pivot about the second pivot axis (S2), and
**that** a damping mechanism (43) is operatively arranged between the first tensioning arm (13) and the second tensioning arm (14) for damping a relative rotational movement between the first tensioning arm (13) and the second tensioning arm (14).

7. Belt drive comprising
a belt (4) drivingly wound around a plurality of pulleys (5, 6, 7), and
a belt tensioning device (1) according to any one of claims 1 to 6 for tensioning the belt (4),
wherein a central rotational position of the first tensioning arm (13) relative to the base body (11) is that rotational position which is established when the belt tensioning device (1) is at a standstill in the installed state due to the equilibrium of forces acting on the belt tensioning device (1).

## Revendications

1. Dispositif de tension de courroie (1) comprenant :
un corps de base (11),
un premier bras de tension (13), qui est logé pouvant pivoter sur le corps de base (11) autour d'un premier axe de pivotement (S1), et qui comporte un premier rouleau de tension (8) pouvant tourner,
un deuxième bras de tension (14), qui est logé pouvant pivoter par rapport au corps de base (11) autour d'un deuxième axe de pivotement (S2), et qui comporte un deuxième rouleau de tension (9) pouvant tourner,
un système à ressort (15), qui est disposé entre le premier bras de tension (13) et le deuxième bras de tension (14) et sur lequel sont appuyés faisant ressort en direction périphérique le premier bras de tension (13) et le deuxième bras de tension (14), et
des moyes d'amortissement (33), qui sont disposés de façon fonctionnelle entre le corps de base (11) et le premier bras de tension (13) pour amortir un un mouvement de rotation relatif entre le premier bras de tension (13) et le corps de base (11),
sachant que les moyens d'amortissement (33) génèrent, lors d'un pivotement du premier bras de tension (13) par rapport au corps de base (11), un couple d'amortissement (M) variant en fonction de la position de rotation et/ou de la direction de rotation du premier bras de tension (13) par rapport au corps de base (11),
**caractérisé en ce qu'**
un élément faisant ressort (31) est radialement disposé entre le corps de base (11) et le premier bras de tension (13), sachant que l'élément faisant ressort (31) est maintenu solidaire en rotation sur le corps de base (11) et un évidement (34) est disposé dans le premier bras de tension (13) ou l'élément faisant ressort (31) est maintenu solidaire en rotation sur le premier bras de tension (13) et un évidement (34) est disposé dans le corps de base (11),
**en ce que** l'élément faisant ressort (31) est disposé dans la position de rotation médiane du premier bras de tension (13) par rapport au corps de base (11) en chevauchement dans la direction périphérique avec l'évidement (34), et
**en ce que** l'élément faisant ressort (31) est précontraint dans une position de rotation pivotée s'écartant de la position de rotation médiane du premier bras de tension (13) par rapport au corps de base (11) et est disposé exerçant une force radiale entre une surface d'appui du corps de base (11) et une surface d'appui du premier bras de tension (13).

2. Courroie dentée selon la revendication 1,
**caractérisé en ce que,**
les moyens d'amortissement (33) génèrent dans une position de rotation médiane du premier bras de tension (13) par rapport au corps de base (11) lors d'une rotation du premier bras de tension (13) par rapport au corps de base (11), un couple d'amortissement (M), qui est plus petit que le couple d'amortissement (M) dans au moins une position de rotation pivotée s'écartant de la position de rotation médiane du premier bras de tension (13) par rapport au corps de base (11).

3. Courroie dentée selon la revendication 1 ou 2,
**caractérisé en ce qu'**
il existe des valeurs de frottement différentes sur la périphérie entre une surface d'appui (27) du corps de base (11) et une surface d'appui (29) du premier bras de tension (13).

4. Courroie dentée selon l'une quelconque des revendications 1 à 3,
**caractérisé en ce que**
les moyens d'amortissement (33) génèrent lors d'un pivotement du premier bras de tension (13) par rapport au corps de base (11) en partant d'une position de rotation médiane du premier bras de tension (13) par rapport au corps de base (11) en direction d'une position de rotation pivotée s'écartant de la position de rotation médiane, un couple d'amortissement (M) plus élevé que lors d'un pivotement du premier bras de tension (13) par rapport au corps de base (11) en partant d'une position de rotation pivotée du premier bras de tension (13) par rapport au corps de base (11) en direction de la position de rotation médiane.

5. Courroie dentée selon l'une quelconque des revendications 1 à 4,
**caractérisé en ce qu',**
un élément faisant ressort (31) est radialement disposé entre le corps de base (11) et le premier bras de tension (13) et est maintenu solidaire en rotation avec l'un par le corps de base (11) et le premier bras de tension (13), et
**en ce que** l'élément faisant ressort (31) est radialement précontraint dans une première direction de pivotement du premier bras de tension (13) par rapport au corps de base (11) et est disposé en libération radiale dans une deuxième direction de pivotement opposée à la première direction de pivotement.

6. Dispositif de tension de courroie selon l'une quelconque des revendications 1 à 5,
**caractérisé en ce que,**
le deuxième bras de tension (14) est logé pouvant pivoter sur le premier bras de tension (13) autour du deuxième axe de pivotement (S2), et
**en ce que** des moyens d'amortissement (43) sont disposés de façon fonctionnelle entre le premier bras de tension (13) et le deuxième bras de tension (14) pour amortir un mouvement de rotation relatif entre le premier bras de tension (13) et le deuxième bras de tension (14).

7. Entraînement de courroie comprenant une courroie (4), qui s'enroule en entraînement autour de plusieurs poulies à courroie (5, 6,7), et
un dispositif de tension de courroie (1) selon l'une quelconque des revendications 1 à 6 pour tendre la courroie (4),
sachant qu'une position de rotation médiane du premier bras de tension (13) par rapport au corps de base (11) est la position de rotation qui se règle à l'arrêt à l'état monté en raison de l'équilibre des forces des forces agissant sur le dispositif de tension de courroie (1) .
